# EUROPÄISCHE PATENTSCHRIFT

(11) **EP 2 630 039 B1**
(45) Veröffentlichungstag und Bekanntmachung des Hinweises auf die Patenterteilung: **10.12.2014**
(21) Anmeldenummer: 11772893.1
(22) Anmeldetag: 17.10.2011
(51) Int. Cl.: B64F 1/26, B64F 5/00

(54) **SCHALLDÄMPFER**
SOUND ABSORBER
AMORTISSEUR DE BRUIT

(30) Priorität: 18.10.2010 DE 102010048581
(43) Veröffentlichungstag der Anmeldung: 28.08.2013
(73) Patentinhaber: Lufthansa Technik AG, 22335 Hamburg (DE)
(72) Erfinder: ADAMCZYK, Günther, 85435 Erding (DE)
(74) Vertreter: Müller Verweyen
(86) Internationale Anmeldenummer: PCT/EP2011/005202
(87) Internationale Veröffentlichungsnummer: WO 2012/052146

(56) Entgegenhaltungen:
- DATABASE WPI Week 200364 Thomson Scientific, London, GB; AN 2003-674133 XP002668083, -& JP 2003 118699 A (TOYO SEISAKUSHO KK) 23. April 2003 (2003-04-23)

## Beschreibung

Die Erfindung betrifft einen Schalldämpfer für Flugzeuge mit den Merkmalen des Oberbegriffs von Anspruch 1.

Bei der Instandhaltung von Flugzeugen wird in der Regel in Wartungshallen an den Luftfahrzeugen gearbeitet. Dabei werden zum Teil Bordsysteme in Betrieb genommen, die durch einen Kühlluftstrom gekühlt werden müssen.

Beim Ausströmen dieser Kühlluft aus einer an der Unterseite des Flugzeugs angeordneten Austrittsöffnung kann die über 100 km/h schnelle Kühlluft einen gewerteten Schalldruckpegel von über 86,8 dBA erzeugen. Diese Lärmbelästigung, der sog. Industrielärm oder Gewerbelärm, stört die Kommunikation und Konzentration der am Flugzeug oder in der Nähe des Flugzeugs arbeitenden Personen. Schon Geräusche von 64 dBA bis 75 dBA bewirken im menschlichen Körper Stress und können zu gesundheitlichen Schäden führen. Dabei bedeutet ein Unterschied von ±10 Dezibel für das menschliche Gehör eine Verdoppelung bzw. eine Halbierung der Lautstärke.

Um den Schalldruck zu dämpfen sind durch offenkundige Vorbenutzung Schalldämpfer für Flugzeuge bekannt, siehe JP2003118699, die im Wesentlichen aus einem Umlenkrohr bestehen, welches auf einem Gestell angebracht ist und an die Austrittsöffnung der Kühlluft herangefahren wird, so dass die Kühlluft durch den Schalldämpfer hindurchströmt. Auf diese Weise kann der Schalldruck reduziert werden, jedoch reicht insbesondere bei größeren Flugzeugen eine solche Reduktion nicht aus, um den Schalldruck auf ein erträgliches Maß zu reduzieren.

Der Erfindung liegt daher die Aufgabe zugrunde, einen Schalldämpfer für ein Flugzeug bereitzustellen, der den vom Flugzeug erzeugten Schalldruck besonders gut dämpft.

Die Erfindung löst diese Aufgabe mit einem Schalldämpfer mit den Merkmalen des Anspruchs 1. Weitere bevorzugte Ausgestaltungen sind den Unteransprüchen und den zugehörigen Beschreibungen und Zeichnungen zu entnehmen.

Zur Lösung der Erfindung wird erfindungsgemäß ein Schalldämpfer für ein Flugzeug, umfassend ein auf Rollen fahrbares Gestell mit einem Schalldämpferkörper vorgeschlagen, welcher mit einer Anlagefläche an einer Außenhaut des Flugzeugs anlegbar ist und wobei der Schalldämpferkörper auf dem Gestell verschiebbar angeordnet ist und mittels eines Federelementes in Verschieberichtung federbelastet ist, so dass der verschiebbare Schalldämpferkörper mit der Anlagefläche federvorgespannt zur Anlage an der Außenhaut des Flugzeuges bringbar ist.

Durch die von dem Federelement ausgeübte Federkraft wird der Schalldämpferkörper gegen das Flugzeug gedrückt, vorzugsweise ist der Schalldämpferkörper über der Austrittsöffnung der Kühlluft positioniert, so dass die Kühlluft durch den Schalldämpferkörper hindurch geleitet wird und so der Schalldruck vom Schalldämpferkörper besonders gut gedämpft wird.

Der Schalldämpferkörper wird zusätzlich durch das Federelement abgefedert und somit wird ermöglicht, dass kleine Veränderungen im Einfederungszustand des Flugzeugs, beispielsweise ausgelöst durch Wartungs- und Reinigungspersonal, welche durch das Flugzeug laufen, durch das Federelement ausgeglichen werden können. Der Schalldämpferkörper bewegt sich in der Verschiebeachse je nach Einfederungszustand des Flugzeugs auf und ab, wobei das Federelement den Schalldämpferkörper stets an die Flugzeugaußenhaut andrückt und so den emittierten Schalldruck verringert. Durch diese Reduzierung der Schallemissionen wird die von den betroffenen Arbeitskräften wahrgenommene Lärmbelästigung verringert, wodurch bessere Arbeitsbedingungen geschaffen werden. Gesetzliche Maßgaben bezüglich des Arbeitsschutzes können durch den Einsatz eines erfindungsgemäßen Schalldämpfers auch leichter eingehalten werden.

Vorzugsweise weist der Schalldämpferkörper an der Anlagefläche eine Kunststofflippe auf. Durch die Kunststofflippe, die vorzugsweise aus Schaumstoff besteht, wird einerseits der Effekt der Schalldämpfung des Schalldämpferkörpers erhöht und zusätzlich gewährleistet, dass es zu keinen Beschädigungen an der Außenhaut des Flugzeuges durch den Einsatz des Schalldämpfers kommen kann. Die Kunststofflippe ist vorzugsweise direkt auf der Anlagefläche vorgesehen, in einer anderen bevorzugten Ausführungsform ist die Kunststofflippe an dem Umfang des Schalldämpferkörpers angeordnet und umgibt somit den Schalldämpferkörper. Die Kunststofflippe ist vorzugsweise im höchsten Abschnitt des Schalldämpfers angeordnet und somit bevorzugt auch der Abschnitt, über den der Schalldämpfer mit der Flugzeugaußenhaut in Kontakt steht.

Vorzugsweise ist das Federelement als Spiralfeder ausgeführt. Das Ausführen des Federelements als Spiralfeder ist eine einfache und kostengünstige Möglichkeit, eine Federkraft für das Andrücken des Schalldämpferkörpers an das Flugzeug bereitzustellen.

Vorzugsweise ist das Federelement als Gasdruckfeder ausgeführt. Durch das Ausführen des Federelements als Gasdruckfeder ist es möglich, eine vom Federweg im Wesentlichen unabhängige Federkraft einzustellen und so die Schalldämpfung auf konstant hohem Niveau zu halten, was insbesondere für den Einsatz eines Schalldämpfers für unterschiedliche Flugzeugtypen vorteilhaft ist, da diese in der Regel auch unterschiedliche Flugzeughöhen aufweisen. Aber auch schon beim Benutzen eines erfindungsgemäßen Schalldämpfers für nur einen einzigen Flugzeugtyp ist das Ausführen des Federelements als Gasdruckfeder vorteilhaft, da das tatsächliche Gewicht des Flugzeugs bzw. der Einfederungszustand des Fahrwerks und dadurch die Höhe des Flugzeugs durchaus variieren kann, die erfindungsgemäße Lärmreduktion jedoch davon unabhängig ermöglicht wird.

Vorzugsweise ist ein Dämpfer zum Dämpfen der Verschiebebewegung des Schalldämpferkörpers vorgesehen. Diese Dämpfung wird vorzugsweise durch eine entsprechende Gasdruckfeder ermöglicht, die neben der Dämpfung auch die benötigte Federkraft bereitstellt. Durch die Dämpfung kann der Schalldämpfer in benutzerfreundlicher Weise in Position gebracht werden: Der Schalldämpferkörper wird in Spannrichtung heruntergedrückt und losgelassen, woraufhin er nicht nach oben schnellt, sondern sich aufgrund der Dämpfung langsam ausfährt. In dieser Zeit, oder während der Schalldämpferkörper noch herunter gedrückt wird, kann der Schalldämpfer in einfacher Weise unter ein zu dämpfendes Flugzeug geschoben werden, wobei der Schalldämpferkörper sich nach dem Loslassen aufgrund der auf ihn wirkenden Federkraft weiter in Richtung des zu dämpfenden Flugzeugs bewegt, bis er schließlich erfindungsgemäß vom Federelement gegen das Flugzeug gedrückt wird.

Vorzugsweise ist die Innen- und/oder die Außenseite des Schalldämpferkörpers zum Teil oder vollständig mit einem Absorptionsmaterial ausgekleidet. Durch das Absorptionsmaterial im bzw. auf dem Schalldämpferkörper kann die Dämpfung des Schalldrucks erhöht und so der Effekt der verringerten Lärmbelastung weiter verstärkt werden. Vorzugsweise wird dazu offenporiges Absorptionsmaterial eingesetzt, bevorzugt sog. Akustikschaum, der besonders gut zur Schallabsorption geeignet ist. Zur Unterstützung der Schalldämpfung umfasst der Schalldämpferkörper bevorzugt zusätzliche Barriereschichten, die den Effekt der Schallabsorption verstärken können. Diese Barriereschichten zeichnen sich insbesondere durch ein hohes Flächengewicht aus.

Vorzugsweise ist das Absorptionsmaterial als Pyramidenschaum ausgeführt. Pyramidenschaum ist als Absorptionsmaterial zur Schallabsorption vorteilhaft, da die vom Pyramidenschaum bewirkte Schallabsorption, also die Umwandlung von Schallenergie in Wärme, zu einer verbesserten Reduzierung der Lärmbelästigung führt.

Vorzugsweise sind auf der Außenseite des Schalldämpferkörpers ein oder mehrere Handgriffe angeordnet. Durch den oder die Handgriff(e) kann der Schalldämpfer in einfacher Weise in der Wartungshalle hin- und herbewegt werden. Darüber hinaus kann der Schalldämpferkörper durch den oder die Handgriff(e) durch den Nutzer mit verhältnismäßig geringer Kraftaufwendung heruntergedrückt werden.

Vorzugsweise ist der Hubweg des Federelements größer als 400 mm. Durch einen Hubweg von mehr als 400 mm ist der Schalldämpfer ohne Modifikation für mehrere verschiedene Flugzeugtypen geeignet.

Vorzugsweise weist das Gestell einen zusätzlichen Verschiebemechanismus auf, mit dem der Schalldämpferkörper mitsamt oder auch ohne Federelement und ohne eine Veränderung der Federkraft des Federelements auf mehrere Höhen ausgefahren werden kann. Durch diesen zweiten Verschiebemechanismus kann der Schalldämpfer auch bei deutlich größeren Flugzeugtypen zur Dämpfung eingesetzt werden, für die der Schalldämpfer sonst zu klein gewesen wäre.

Demnach umfasst der Schalldämpfer vorzugsweise ein Höhenverstellelement, durch das die Gesamthöhe des Schalldämpfers auf verschiedene Niveaus einstellbar ist. Somit ist es dabei bevorzugt, wenn das Höhenverstellelement mehrere fixierbare Positionen aufweist, durch die der Schalldämpfer auf unterschiedliche Gesamthöhen zum Einsatz an unterschiedlichen Flugzeugmustern einstellbar ist.

Unabhängig davon weist der Schalldämpfer vorzugsweise ein Arretierungselement auf, durch das der Schalldämpferkörper nach einer vertikalen Abwärtsbewegung in eine Rastposition festlegbar ist. Durch diese Fixiermöglichkeit kann der Schalldämpfer in eine vorgespannte Position gebracht werden und im eingefahrenen Zustand anschließend unter das zu dämpfende Flugzeug geschoben werden. Durch Betätigung eines ebenfalls vorzugsweise vorgesehenen Freigabeelements wird diese Fixierung aufgehoben und der Schalldämpferkörper fährt automatisch (durch die Federkraft des Federelements) an die Flugzeugunterseite des zu dämpfenden Flugzeugs heran.

Die Erfindung wird im Folgenden anhand bevorzugter Ausführungsformen unter Bezugnahme auf die beigefügten Figuren erläutert. In den Figuren ist im Einzelnen zu erkennen:
- Fig. 1:: Erstes Ausführungsbeispiel eines erfindungsgemäßen Schalldämpfers für ein Flugzeug.
- Fig. 2:: Zweites Ausführungsbeispiel eines erfindungsgemäßen Schalldämpfers für ein Flugzeug.
- Fig. 3:: Drittes Ausführungsbeispiel eines erfindungsgemäßen Schalldämpfers für ein Flugzeug.

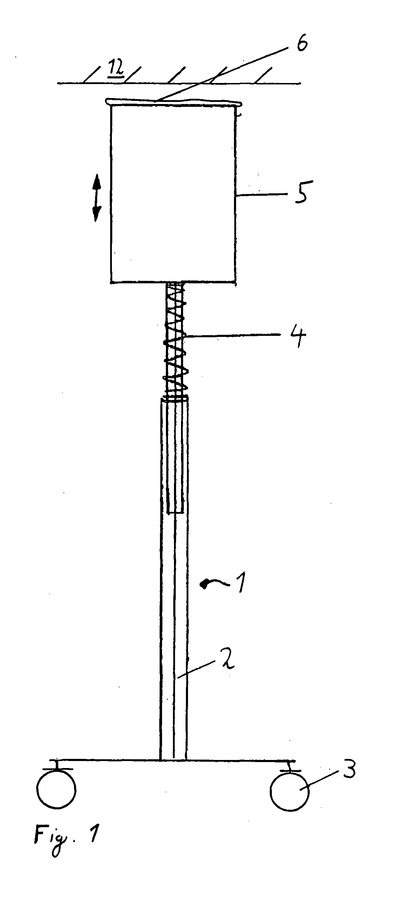

In der Figur 1 ist ein erfindungsgemäßer Schalldämpfer 1 dargestellt. Der Schalldämpfer 1 umfasst einen Schalldämpferkörper 5, der verschiebbar auf einer vertikalen Achse eines Gestells 2 angeordnet ist. Die vertikale Achse des Gestells 2 fußt auf einer Plattform, die mit Rollen 3 ausgestattet ist. Zwischen Gestell 2 und Schalldämpferkörper 5 ist ein Federelement 4 angeordnet, welches vorzugsweise als Spiralfeder ausgeführt ist. Diese Spiralfeder drückt mit ihrer Federkraft gegen den Schalldämpferkörper 5 und verschiebt ihn so in Richtung einer Flugzeugunterseite 12. Der Schalldämpferkörper 5 gelangt durch diese Zustellbewegung mit einer Anlagefläche an einem Abschnitt der Außenhaut des Flugzeugs an der Flugzeugunterseite 12 zur Anlage, wobei die Anlagefläche mit einer Kunststofflippe 6 versehen ist, die vorzugsweise aus Schaumstoff besteht und mit dem Schalldämpferkörper 5 verbunden ist. Die von dem Federelement 4 ausgeübte Federkraft ist dabei in Verschieberichtung gerichtet, so dass der Schalldämpferkörper 5 dabei mit einer erhöhten Anpresskraft an der Außenhaut des Flugzeuges anliegt.

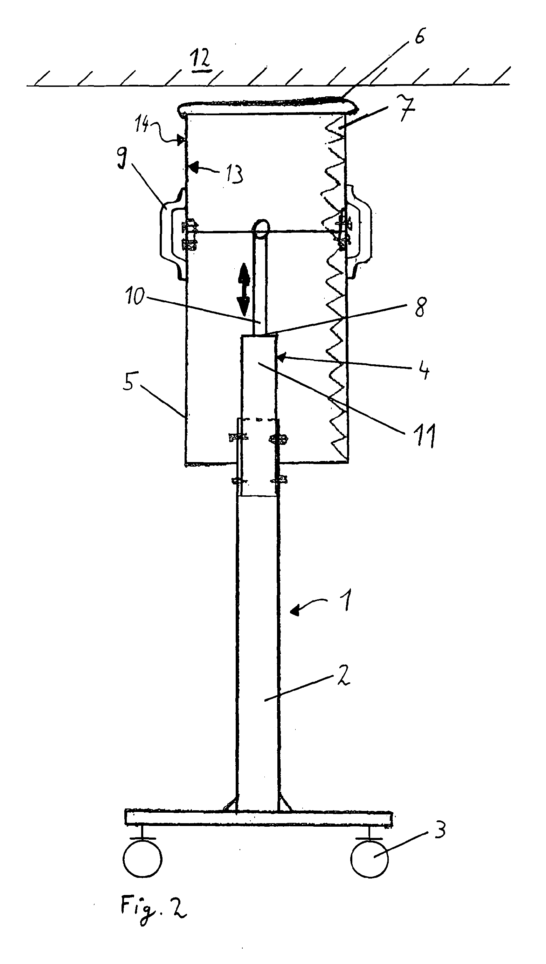

In der Figur 2 ist eine andere bevorzugte Ausführungsform des Schalldämpfers 1 dargestellt. Der Grundaufbau ist dem aus Figur 1 ähnlich, ein wesentlicher Unterschied zum Schalldämpfer 1 aus Figur 1 besteht darin, dass das Federelement 4 als Gasdruckfeder 8 ausgeführt ist. Die Gasdruckfeder 8 umfasst einen Zylinder 11, der mit dem Gestell 2 fest verbunden ist, und eine Kolbenstange 10, die vorzugsweise über eine horizontale Verbindungsachse mit dem Schalldämpferkörper 5 verbunden ist. In der Gasdruckfeder 8 ist vorzugsweise eine Dämpfung integriert, so dass die Verschiebebewegung des Schalldämpferkörpers 5 gedämpft ist. Des Weiteren weist der Schalldämpferkörper 5 an seiner Außenseite 14 vorzugsweise zwei Handgriffe 9 auf, die sich bevorzugt direkt gegenüberliegen. Die Innenseite 13 des Schalldämpferkörpers 5 ist vorzugsweise vollständig mit einem Absorptionsmittel 7 ausgekleidet, bevorzugt wird Pyramidenschaum als Absorptionsmittel 7 verwendet.

Der erzeugte Lärm eines Flugzeugs kann durch den erfindungsgemäßen Schalldämpfer 1 verringert werden. Der Schalldämpfer 1 wird unter einem Flugzeug so in Stellung gebracht, dass das Federelement 4 den Schalldämpferkörper 5 gegen die Flugzeugunterseite 12 drückt.

Bei dem in der Figur 2 dargestellten Schalldämpfer 1 kann dies in besonders einfacher Weise erfolgen. Der Benutzer greift mit beiden Händen die Handgriffe 9 und drückt den Schalldämpferkörper 5 entgegen der von dem Federelement 4 aufgebrachten Federkraft herunter. Durch die Handgriffe 9 kann dies besonders einfach erfolgen, da er nur eine Gewichtskraft aufbringen muss und nicht noch zusätzlich eine radial wirkende Haltekraft aufbringen muss, um zu verhindern, dass ihm der Schalldämpferkörper 5 aus den Händen gleitet.

Mit hinunter gedrücktem Schalldämpferkörper 5 kann der Schalldämpfer 1 in einfacher Weise unter dem Flugzeug in die gewünschte Position, vorzugsweise direkt über der Austrittsöffnung der Kühlluft, positioniert werden, so dass die Kühlluft durch den Schalldämpferkörper 5 hindurch strömt und durch den Schalldämpferkörper 5 eine Dämpfung des Schalldrucks bewirkt wird. Der relative Durchmesser des Schalldämpferkörpers 5 ist dabei vorzugsweise größer als der relative Durchmesser der Austrittsöffnung, so dass Verwirbelungen, die innerhalb des Schalldämpferkörpers 5 auftreten können, keinen Druckstau entstehen lassen, durch den die Luft am Austreten gehindert werden könnte. Dazu besteht der Schalldämpferkörper 5 bevorzugt aus nur einer zylinderartigen Kammer, die mit Absorptionsmaterial 7 ausgekleidet ist und durch die die Luft ohne Druckstau ausströmen kann. Durch Vermeidung eines Druckstaus kann gewährleistet werden, dass die Avionicsysteme des Flugzeugs nicht durch den Einsatz eines erfindungsgemäßen Schalldämpfers 1 beschädigt werden können.

Nach dem Loslassen der Haltegriffe 9 bewegt sich der Schalldämpferkörper 5 aufgrund der auf ihn wirkenden Federkraft in Richtung der Flugzeugunterseite 12. Er kommt über die auf dem Schalldämpferkörper 5 angeordnete Kunststofflippe 6 an der Flugzeugunterseite 12 zur Anlage und wird durch die Federkraft des Federelements 4 gegen die Flugzeugunterseite 12 gepresst.

Um zu ermöglichen, dass ein Schalldämpfer 1 für verschieden hohe Flugzeuge eingesetzt werden kann, ist der Hubweg der Gasdruckfeder 8 vorzugsweise größer als 400 mm. Darüber hinaus kann mit einem zusätzlichen, nicht dargestellten Verschiebemechanismus, mit dem der Schalldämpferkörper 5 mitsamt oder ohne Federelement 4 auf mehrere Höhen ausgefahren werden kann, der erfindungsgemäße Schalldämpfer auch auf größeren Flugzeugen, die eine größere Distanz zwischen Boden und Flugzeugunterseite 12 aufweisen, eingesetzt werden. Dieser zusätzliche Verschiebemechanismus ist vorzugsweise als in das Gestell 2 integrierter Teleskopstab ausgeführt, bei dem mit einem Handgriff der Schalldämpferkörper 5 auf eine weitere oder auf mehrere zusätzliche Höhen verschoben werden kann. Diese Höhen sind vorzugsweise durch definierte, fest einstellbare Stufen im Verschiebemechanismus bestimmten Flugzeugtypen zugeordnet. Beispielsweise ist eine Einstellung für Flugzeuge der A330/340 Familie und eine andere für die des A380.

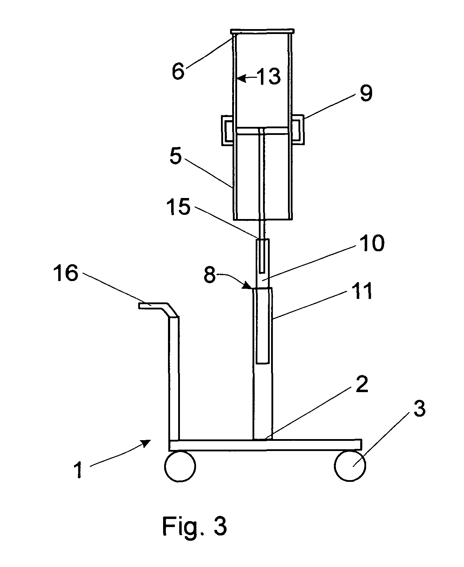

Das zusätzliche Höhenverstellelement 15 ist in der Figur 3 dargestellt. Ansonsten entspricht der in der Figur 3 dargestellte Schalldämpfer 1 im Wesentlich dem aus der Figur 2. Zusätzlich zu einer Gasdruckfeder 8 weist der Schalldämpfer 1 in diesem Ausführungsbeispiel ebenfalls eine weitere vertikale Verschiebemöglichkeit auf. Durch das Höhenverstellelement 15 kann der Schalldämpferkörper 5 auf verschiedene Höhenniveaus eingestellt werden, und somit derselbe Schalldämpfer 1 zur Dämpfung von verschiedenen Flugzeugen und Flugzeugmustern eingesetzt werden.

Zum Schieben oder Ziehen weist der Schalldämpfer 1 einen Handlauf 16 auf, an dem vorzugsweise auch ein Bedienelement zum Festsetzen und Lösen einer Feststellbremse vorgesehen ist. Durch eine vorzugsweise an den Rollen 3 angeordnete Feststellbremse können die Rollen 3 festgelegt werden und der Schalldämpfer 1 ist somit an der gewünschten Position fixierbar. Ein ungewünschtes Lösen oder Verschieben des Schalldämpfers 1 kann so vermieden werden.

Zusätzlich zu der Höhenverstellbarkeit weist der Schalldämpfer 1 aus der Figur 3 noch ein nicht dargestelltes Arretierungselement auf, durch das der Schalldämpferkörper 5 nach einer vertikalen Abwärtsbewegung in eine Rastposition festlegbar ist. Somit muss der Schalldämpferkörper 5 während der Positionierung nicht konstant heruntergedrückt werden, sondern nach einem einmaligen Herunterdrücken rastet der Schalldämpferkörper 5 ein. Durch Betätigung eines ebenfalls nicht dargestellten Freigabeelements wird diese Fixierung aufgehoben und der Schalldämpferkörper fährt automatisch (durch die Federkraft des Federelements) an die Flugzeugunterseite des zu dämpfenden Flugzeugs heran. Das Freigabeelement ist vorzugsweise auf Höhe und/oder an den Handgriffen 9 angeordnet.

Durch das Andrücken des Schalldämpferkörpers 5 gegen die Flugzeugunterseite 12 kann der vom Flugzeug produzierte Lärm gedämpft werden. Durch den Schalldämpferkörper 5 werden Anteile des Schalls absorbiert und so der emittierte Schalldruck verringert. Dazu ist die Innenseite 13 des Schalldämpferkörpers 5 vorzugsweise vollständig einem Absorptionsmaterial 7 ausgekleidet. Das Absorptionsmaterial 7 ist dabei bevorzugt als Pyramidenschaum ausgeführt und weiter bevorzugt als Pyramidenschaum, der besonders gut zur Schalldämpfung geeignet ist, beispielsweise als akustischer Pyramidenschaum.

Der Effekt der Geräuschreduzierung ist deutlich messbar: Messungen mit einem kalibrierten Schallpegelmessgerät ergaben ohne erfindungsgemäßen Schalldämpfer Werte zwischen 95,5 dBA und 105 dBA. Mit installiertem erfindungsgemäßem Schalldämpfer 1 wurden bei gleichen Bedingungen nur noch 74 dBA gemessen.

Somit kann durch den erfindungsgemäßen Schalldämpfer 1 die Lärmbelästigung für die Arbeitskräfte bei der Flugzeugüberholung deutlich gesenkt werden und somit den Anforderungen des Arbeitsschutzes leichter entsprochen werden sowie bessere Arbeitsbedingungen ermöglicht werden.

### Bezugszeichenliste:

- 1: Schalldämpfer
- 2: Gestell
- 3: Rollen
- 4: Federelement
- 5: Schalldämpferkörper
- 6: Kunststofflippe
- 7: Absorptionsmaterial
- 8: Gasdruckfeder
- 9: Handgriffe
- 10: Kolbenstange
- 11: Zylinder
- 12: Flugzeugunterseite
- 13: Innenseite
- 14: Außenseite
- 15: Höhenverstellelement
- 16: Handlauf

## Patentansprüche

1. Schalldämpfer (1) für ein Flugzeug, umfassend ein auf Rollen (3) fahrbares Gestell (2) mit einem Schalldämpferkörper (5), welcher mit einer Anlagefläche an einer Außenhaut des Flugzeugs anlegbar ist, **dadurch gekennzeichnet, dass** der Schalldämpferkörper (5) auf dem Gestell (2) verschiebbar angeordnet ist und mittels eines Federelementes (4) in Verschieberichtung federbelastet ist, so dass der verschiebbare Schalldämpferkörper (5) mit der Anlagefläche federvorgespannt zur Anlage an der Außenhaut des Flugzeuges bringbar ist.

2. Schalldämpfer (1) nach Anspruch 1, **dadurch gekennzeichnet, dass** der Schalldämpferkörper (5) an der Anlagefläche eine Kunststofflippe (6) aufweist.

3. Schalldämpfer (1) nach Anspruch 1 oder 2, **dadurch gekennzeichnet, dass** das Federelement (4) als Spiralfeder ausgeführt ist.

4. Schalldämpfer (1) nach einem der vorangegangenen Ansprüche, **dadurch gekennzeichnet, dass** das Federelement (4) als Gasdruckfeder (8) ausgeführt ist.

5. Schalldämpfer (1) nach einem der vorangegangenen Ansprüche, **dadurch gekennzeichnet, dass** ein Dämpfer zum Dämpfen der Verschiebebewegung des Schalldämpferkörpers (5) vorgesehen ist.

6. Schalldämpfer (1) nach einem der vorangegangenen Ansprüche, **dadurch gekennzeichnet, dass** die Innen- und/oder die Außenseite (13, 14) des Schalldämpferkörpers (5) zum Teil oder vollständig mit einem Absorptionsmaterial (7) ausgekleidet ist.

7. Schalldämpfer (1) nach Anspruch 6, **dadurch gekennzeichnet, dass** das Absorptionsmaterial (7) als Pyramidenschaum ausgeführt ist.

8. Schalldämpfer (1) nach einem der vorangegangenen Ansprüche, **dadurch gekennzeichnet, dass** auf der Außenseite (14) des Schalldämpferkörpers (5) ein oder mehrere Handgriffe (9) angeordnet sind.

9. Schalldämpfer (1) nach einem der vorangegangenen Ansprüche, **dadurch gekennzeichnet, dass** der Hubweg des Federelements (4) größer als 400 mm ist.

10. Schalldämpfer (1) nach einem der vorangegangenen Ansprüche, **dadurch gekennzeichnet, dass** das Gestell (2) einen zusätzlichen Verschiebemechanismus aufweist, mit dem der Schalldämpferkörper (5) mitsamt Federelement (4) ohne eine Veränderung der Federkraft auf mehrere Höhen ausgefahren werden kann.

11. Schalldämpfer (1) nach einem der vorangegangenen Ansprüche, **dadurch gekennzeichnet, dass** der Schalldämpfer (1) ein Höhenverstellelement (15) umfasst, durch das die Gesamthöhe des Schalldämpfers (1) auf verschiedene Niveaus einstellbar ist.

12. Schalldämpfer (1) nach Anspruch 11, **dadurch gekennzeichnet, dass** das Höhenverstellelement (15) mehrere fixierbare Positionen aufweist, durch die der Schalldämpfer (1) auf unterschiedliche Gesamthöhen zum Einsatz an unterschiedlichen Flugzeugmustern einstellbar ist.

13. Schalldämpfer (1) nach einem der vorangegangenen Ansprüche, **dadurch gekennzeichnet, dass** der Schalldämpfer (1) ein Arretierungselement aufweist, durch das der Schalldämpferkörper (5) nach einer vertikalen Abwärtsbewegung in eine Rastposition festlegbar ist.

## Claims

1. Silencer (1) for an aircraft, including a rack (2) which can be moved on rolls (3) and comprises a silencer body (5) which can be moved up against an outer skin of the aircraft with a contact surface, **characterized in that** the silencer body (5) is displaceably mounted on the rack (2) and is spring-loaded in the displacing direction via a spring element (4), so that the displaceable silencer body (5) can be moved up against the outer skin of the aircraft with the contact surface in a spring-loaded manner.

2. Silencer (1) according to claim 1, **characterized in that** the silencer body (5) comprises a plastic lip (6) on the contact surface.

3. Silencer (1) according to claim 1 or 2, **characterized in that** the spring element (4) is a spiral spring.

4. Silencer (1) according to any one of the preceding claims, **characterized in that** the spring element (4) is a gas pressure spring (8).

5. Silencer (1) according to any one of the preceding claims, **characterized in that** a damping element is provided for damping the displacing movement of the silencer body (5).

6. Silencer (1) according to any one of the preceding claims, **characterized in that** the inner surface and/or the outer surface (13, 14) of the silencer body (5) is partially or completely covered with an absorbing material (7).

7. Silencer (1) according to claim 6, **characterized in that** the absorbing material (7) is a pyramid foam.

8. Silencer (1) according to any one of the preceding claims, **characterized in that** one or more handles (9) are located on the outer surface (14) of the silencer body (5).

9. Silencer (1) according to any one of the preceding claims, **characterized in that** the height of lift of the spring element (4) is larger than 400 mm.

10. Silencer (1) according to any one of the preceding claims, **characterized in that** the rack (2) comprises an additional displacing mechanism with which the silencer body (5) together with the spring element (4) can be extended to several heights without a change to the spring force.

11. Silencer (1) according to any one of the preceding claims, **characterized in that** the silencer (1) includes a height adjusting element (15) by which the total height of the silencer (1) can be adjusted to different height levels.

12. Silencer (1) according to claim 11, **characterized in that** the height adjusting element (15) comprises several fixable positions by which the silencer (1) can be adjusted to different total heights for being operated on different types of aircraft.

13. Silencer (1) according to any one of the preceding claims, **characterized in that** the silencer (1) comprises a locking element by which the silencer body (5) can be fixed in a locked position after a vertical downward movement.

## Revendications

1. Amortisseur acoustique (1) pour un avion, comprenant un bâti (2) mobile sur des roulettes (3), comportant un corps (5) d'amortisseur acoustique, qui peut par une surface d'appui s'appuyer contre une tôle extérieure de l'avion, **caractérisé en ce que** le corps (5) d'amortisseur acoustique est disposé de façon à pouvoir se déplacer sur le bâti (2), et est mis en charge par ressort dans la direction du déplacement à l'aide d'un élément formant ressort (4), de telle sorte que le corps (5) de l'amortisseur acoustique déplaçable puisse, par la surface d'appui, et en étant précontraint par le ressort, venir s'appuyer contre la tôle extérieure de l'avion.

2. Amortisseur acoustique (1) selon la revendication 1, **caractérisé en ce que** le corps (5) de l'amortisseur acoustique présente sur la surface d'appui une lèvre (6) en un matériau plastique.

3. Amortisseur acoustique (1) selon la revendication 1 ou 2, **caractérisé en ce que** l'élément formant ressort (4) est conformé comme un ressort spiral.

4. Amortisseur acoustique (1) selon l'une des revendications précédentes, **caractérisé en ce que** l'élément formant ressort (4) est conformé comme un ressort à gaz (8).

5. Amortisseur acoustique (1) selon l'une des revendications précédentes, **caractérisé en ce qu'**un amortisseur est prévu pour amortir le mouvement de déplacement du corps (5) de l'amortisseur acoustique.

6. Amortisseur acoustique (1) selon l'une des revendications précédentes, **caractérisé en ce que** le côté intérieur et/ou le côté extérieur (13, 14) du corps (5) de l'amortisseur acoustique est en partie ou en totalité revêtu d'un matériau absorbant (7).

7. Amortisseur acoustique (1) selon la revendication 6, **caractérisé en ce que** le matériau absorbant (7) est conformé comme une mousse pyramidale.

8. Amortisseur acoustique (1) selon l'une des revendications précédentes, **caractérisé en ce qu'**une ou plusieurs poignées (9) sont disposées sur le côté extérieur (14) du corps (5) de l'amortisseur acoustique.

9. Amortisseur acoustique (1) selon l'une des revendications précédentes, **caractérisé en ce que** la course de levage de l'élément formant ressort (4) est supérieure à 400 mm.

10. Amortisseur acoustique (1) selon l'une des revendications précédentes, **caractérisé en ce que** le bâti (2) comprend un mécanisme de déplacement supplémentaire, à l'aide duquel le corps (5) de l'amortisseur acoustique peut, avec l'élément formant ressort (4), être sans modification de la force du ressort déployé à plusieurs hauteurs.

11. Amortisseur acoustique (1) selon l'une des revendications précédentes, **caractérisé en ce que** l'amortisseur acoustique (1) comprend un élément de réglage en hauteur (15), grâce auquel la hauteur totale de l'amortisseur acoustique (1) peut être ajustée à différents niveaux.

12. Amortisseur acoustique (1) selon la revendication 11, **caractérisé en ce que** l'élément de réglage en hauteur (15) comprend plusieurs positions pouvant être fixées, par lesquelles l'amortisseur acoustique (1) peut être ajusté à différentes hauteurs totales, pour utilisation sur différents modèles d'avions.

13. Amortisseur acoustique (1) selon l'une des revendications précédentes, **caractérisé en ce que** l'amortisseur acoustique (1) comprend un élément de blocage, grâce auquel le corps (5) de l'amortisseur acoustique peut, après un déplacement vertical vers le bas, être fixé sur une position d'encliquetage.
